# EUROPÄISCHE PATENTSCHRIFT

(11) **EP 3 953 953 B1**
(45) Veröffentlichungstag und Bekanntmachung des Hinweises auf die Patenterteilung: **18.12.2024**
(21) Anmeldenummer: 20733186.9
(22) Anmeldetag: 01.04.2020
(51) Int. Cl.: H01F 5/06, H01F 5/04, H01F 27/32, H01F 41/12, B60L 13/03, H02K 3/44, H02K 15/04, H02K 15/12

(54) **KLIMAFESTE MAGNETSPULE**
CLIMATE-PROOF MAGNETIC COIL
BOBINE MAGNÉTIQUE RÉSISTANTE AUX CONDITIONS CLIMATIQUES

(30) Priorität: 10.04.2019 DE 102019109511
(43) Veröffentlichungstag der Anmeldung: 16.02.2022
(73) Patentinhaber: VEM Sachsenwerk GmbH, 01257 Dresden (DE)
(72) Erfinder: KLOTZSCHE, Tom, 01326 Dresden (DE); MORGENSTERN, Gert, 01157 Dresden (DE); HÜBNER, Jürgen, 01309 Dresden (DE)
(74) Vertreter: Drechsler, Gottfried
(86) Internationale Anmeldenummer: PCT/DE2020/100272
(87) Internationale Veröffentlichungsnummer: WO 2020/207533

(56) Entgegenhaltungen:
- DE-A1- 2 945 480
- JP-A- H07 169 615
- JP-A- S5 857 711
- JP-A- S58 115 801

## Beschreibung

Die Erfindung betrifft eine klimafeste Magnetspule mit ihrem Isolationsaufbau und ein Verfahren zu dessen Herstellung für den Einbau der Magnetspule in einen offenen Eisenkern (Joch) als Tragmagnetspule unter einer Magnetschwebebahn.

Bekannt sind eine Reihe von technischen Lösungen für Magnetschwebefahrzeuge mit unterschiedlich ausgebildeten Magnetformspulen in der jeweiligen Ausführung als Trag-Führ- und/oder Bremsmagnetspulen. In der Regel sind diese speziell geformt um eine entsprechend hohe Magnetfeldstärke erzielen zu können, damit die Magnetschwebefahrzeuge in Schwebe und/oder in der Spur gehalten und entsprechend beschleunigt oder gebremst werden können. Grundvoraussetzung sind dabei auch möglichst geringe Luftspalte zwischen der Magnetspule und dem beispielsweise in Schwebe zu haltenden Objekt um eine hohe Energieeffizienz zu erreichen. Das ist insbesondere mit großflächig ebenen Formspulen erreichbar. Als Beispiel für eine solcherart ebene Magnetspule ist hier die DE 39 07 831 C2 genannt, wo eine hochwarmfeste Kompakt-Magnetspule insbesondere für die Magnetschwebetechnik beschrieben ist. Um die Spule hochwarmfest und klimafest auszubilden ist es hier vorgesehen isolierte Metallfolien auf einen Rechteckeisenkern aufzuwickeln. Diese Spule ist allerdings nur für geringe Magnetfeldstärken geeignet. Auch ist es aus der US 3462 244 bekannt, ein Kabel mit einem Glasgewebematerial zu ummanteln, um die Wärmefestigkeit einer solchen Magnetspule zu erhöhen.

Aus der DE 33 46 031 A1 ist ein Spulenisolationsverfahren bekannt, bei dem zwei unterschiedliche Isolationsschichten auf eine Magnetformspule aufgebracht werden. Dabei wird in einem ersten Isolationsschritt eine Mica-Folie oder ein Mica-Band halbüberlappend um die Abschnitte der Spule gewickelt, welche in der Nut eines Blechpaketes liegen. Die Spulenköpfe werden ebenfalls im ersten Schritt mit isoliert. Sind die Spulen montiert, werden diese dann in einem zweiten Isolationsschritt mit einem thermisch härtbaren Epoxidharz oder einer speziellen Pulverbeschichtung überzogen. Das Harz wird vor allem auf die Spulenköpfe aufgebracht und durch Erhitzen ausgehärtet, wodurch eine zweite hochfeste Isolationsschicht entsteht. Dieses Verfahren ist relativ aufwendig und ist nicht für thermisch hoch belastete elektrische Maschinen oder Magnetspulen geeignet.

Des Weiteren ist in der DE 10 2017 222 426 A1 (WO 2016/244685) ein Anker für einen Linearmotor und ein Linearmotor beschrieben, bei dem die der Anker (Kern) des Linearmotors, d. h. die Magnetspulen nach außen hin von einer speziellen Schutzfolie voll bedeckt sind. Diese vollflächige Schutzfolie besteht aus einem Glasgewebematerial oder einem Kohlefasergewebematerial und ist dabei zusätzlich so ausgebildet, dass sie mit einem Harz imprägnierbar ist. Zur Tränkung werden in dieser technischen Lösung Epoxidharz, Phenolharz oder Acrylharz vorgeschlagen. Diese Schutzfolie mit der zusätzlichen Harzschicht soll das Eindringen von Fremdkörpern und vor allem jegliches Eindringen von auf den Anker auftreffenden Flüssigkeiten, wie insbesondere Spritzwasser zuverlässig verhindern. Diese Lösung ist kostenintensiv und durch die Schutzfolie mit der aufgebrachten Harzschicht wird der Luftspalt zusätzlich vergrößert.

Die Anwendung von Schrumpfschläuchen im Elektromaschinenbau ist aus der DE 100 23 204 A1 nachgewiesen. Dabei erfolgt eine komplette Isolierung von Statorwicklungen für Gleichstrommaschinen und Wechselstrommaschinen durch voll umhüllende Schrumpfschläuche. Diese werden über die gesamte Stabwicklung der Maschinen aufgeschoben und anschließend mittels einer Wärmebehandlung geschrumpft, so dass eine ausreichende auch flüssigkeitsdichte Isolierung erreicht werden kann. Diese technische Lösung ist ebenfalls zeitaufwendig und damit teuer.

Aus der WO 2017 026306 A1 ist eine Isolierharzbeschichtungsverfahren für einen Stator einer rotierenden elektrischen Maschine beschrieben, bei dem die einzelnen verschweißten Schaltverbindungen eines Stators zunächst von je einer zweiteiligen Harzgussform umschlossen werden, in diese dann ein Harz einspritzt wird, dieses Harz ausgehärtet wird und anschließend wieder die Form entfernt wird. Damit wird eine vollflächige witterungsfeste Isolierung der blanken Schaltverbindungen erzielt.

In der DE 42 370 70 A1 ist die Verwendung von elastischen, aus tränkbaren faserverstärkten Gewebematerialien bestehenden, aufwändigen Isoliermänteln oder Isolierstümpfen für die Schaltverbindungen von großen elektrischer Maschinen beschrieben, welche über die zu isolierenden Schaltverbindungen aufgeschoben werden und anschließend in sogenannter Ganztränktechnik in einer Vakuum-Imprägnier-Anlage sowohl im Vakuum als auch unter Druck (VPI-Tränkung) imprägniert und anschließend ausgehärtet werden.

In der JP H07 169 615 A ist eine Formspule mit hoher dielektrischer Festigkeit beschrieben, wobei zwischen inneren Isolierschichten die Teilentladungsmenge gering gehalten werden soll, wenn eine Hochspannung angelegt wird. Dabei ist eine besondere Zwischenschicht aufgebracht, indem ein Leiter isoliert ist, welcher jede Windung mit Ausnahme der Windung der innersten Schicht und der Windung der äußersten Schicht umfasst und eine Art innere Einsatzspule bildet. Die Spule ist mit einem mit Epoxidharz imprägnierten Prepreg-Glimmerband umwickelt und es wird eine weitere isolierende Zwischenschicht eingebracht, der die Windung der innersten Schicht und der Windung der äußersten Schicht bildet und die isolierende Zwischenschicht wird erzeugt, indem ein mit Epoxid imprägniertes Prepreg-Glimmerband zwischen sie und die benachbarte Schicht eingefügt wird. Diese wird erhitzt und gepresst, um die innere Einsatzspule herzustellen. Daher wird der Druck auf die Zwischenschicht-Isolierschicht über die gesamte Oberfläche gleich, und es kann eine Zwischenschicht-Isolierschicht mit günstiger dielektrischer Festigkeit erhalten werden. Abschließend wird diese innere Einsatzspule mit Harz vergossen, um eine Formspule herzustellen. JP S58 57711 A, JP S58 115801 A, DE 29 45 480 A1 offenbaren weitere Magnetspulen.

Der Erfindung liegt die Aufgabe zu Grunde, eine klimafeste Magnetspule und ein einfaches Verfahren zu deren Herstellung für das spätere Aufsetzen und/oder Einsetzen über bzw. auf einen offenen Eisenkern (Joch) zu schaffen, wobei die Spulenisolation eine hohe Wasserdichtheit besitzen soll, auch unter extremen klimatischen Bedingungen die Isolationsfestigkeit gewährleistet, konstruktiv einfach und wartungsfrei aufgebaut ist, kostengünstig ohne aufwändige VPI Tränkprozesse herstellbar ist und zudem eine lange Lebensdauer besitzt.

Die Aufgabe wird erfindungsgemäß mit den Merkmalen des Oberbegriffs und des kennzeichnenden Teils des ersten und zweiten Patentanspruches gelöst. Weitere vorteilhafte Ausgestaltungen sind in den abhängigen rückbezüglichen Unteransprüchen beschrieben. Bei der erfindungsgemäßen klimafesten Magnetspule 1 für das Aufsetzen und/oder Einsetzen in oder auf einen offenen Eisenkern (Joch) erfolgt die Spulenausleitung 2 über ein an der Kupferspule angeordnetes Anschlusskabel 2.1, welches mittels einer Lötstelle mit der Kupferspule stoffschlüssig verbunden ist. Die Lötstelle 5 ist vorzugsweise zusätzlich mit einem Schrumpfschlauch umhüllt. Die Magnetspule 1 wird in einem ersten Einbindeschritt außer die Ausleitungsbereich mit einem epoxidharzhaltigen Prepregband 7 eingebunden.

Dadurch wird eine erhöhte (Klebe-) Anbindung auch an das abschließende Isolations-Deckband 8 erreicht. Über dem Ausleitungsbereich des Anschlusskabels 2 und der Ausleitung zur Spulenüberwachung 3 wird eine wannenförmige Glasfaserhartgewebehülse 4 so angeordnet, dass diese den Ausleitungsbereich vollständig in einem definierten Bereich überdeckt bzw. umschließt. Nun wird die gesamte Magnetspule einschließlich der Glasfaserhartgewebehülse 4 in einem zweiten Einbindeschritt mit einem epoxidharzhaltigen Isolations-Deckband 8 vollständig eingebunden. Anschließend wird diese gefertigte, doppelt isolierte Magnetspule 1 vollständig ausgehärtet, so dass die Isolation zu einer geschlossenen, elastischen Oberfläche verschweißt. Nach dem Aushärten der Isolation wird in die Glasfaserhartgewebehülse 4 eine elastische Vergussmasse in geeigneter Art und Weise eingebracht. Dabei wird das ausgehärtete epoxidharzhaltige Isolations-Deckband 8 im Bereich einer oder mehrerer angeordneter Öffnungen 6 der Glasfaserhartgewebehülse 4 durchtrennt, um die elastische Vergussmasse einzubringen. Diese härtet je nach Zusammensetzung bei normaler Umgebungstemperatur aus oder kann auch zusätzlich mittels eines gesonderten Wärmeeintrages beschleunigt ausgehärtet werden. Im Ergebnis dieses Herstellungsprozesses entsteht eine hochklimafeste Magnetspule 1 mit einer ausreichend elastischen Isolationshülle, welche eine sehr hohe Wasserdichtheit gewährleistet und auch unter extremen klimatischen Bedingungen die geforderte hohe und dauerhafte Isolationsfestigkeit über einen langen Zeitraum beibehält. Insbesondere wird es damit möglich, die temperaturbedingten oftmaligen Ausdehnungsbeanspruchungen (in der Regel durchaus bis zu mehreren Millimetern pro Ausdehnungszyklus an den sensiblen Ausleitungsstellen der Magnetspule 1 dauerhaft ohne Undichtigkeiten und ohne Verringerung der Isolationsfestigkeit für die geplante Lebensdauer garantieren zu können. Diese klimafeste Magnetspule 1 ist konstruktiv einfach und wartungsfrei aufgebaut, kostengünstig herstellbar und besitzt zudem eine verlängerte Lebensdauererwartung.

Bei der klimafesten Magnetspule 1 werden zum besseren Einbringen der elastischen, zunächst niedrigviskosen Vergussmasse in die wannenförmigen Glasfaserhartgewebehülse 4 eine oder zwei oder auch mehrere Öffnungen 6 an geeigneten Stellen so angeordnet, dass die zunächst niedrigviskose Vergussmasse bevorzugt von oben in die Glasfaserhartgewebehülse 4 eingefüllt werden kann, ohne dass in dieser irgendwelche Gas- oder Lufteinschlüsse verbleiben. Im Prinzip ist es auch möglich die mit der Vergussmasse vollgefüllten wannenförmigen Glasfaserhartgewebehülsen 4 von unten über die Ausleitungsbereiche zu montieren.

Bei der klimafeste Magnetspule 1 besteht das epoxidharzhaltige Prepregband aus einem dünnen Glasgewebe mit einem hohen Epoxidharzanteil im Bereich von 125g/m² +/- 20 g/m^{2.} Dadurch wird eine verbesserte Haftung zwischen Isolations-Deckband 8 und Spulendraht erzielt. Durch das Verschmelzen des Epoxidharzes von bevorzugt vier Schichten Deckband entsteht eine elastische, mechanisch robuste, dauerhafte, bewitterungsfeste und wasserdichte Isolation.

Vorzugsweise besteht die elastische Vergussmasse aus einer zunächst niedrigviskosen PUR-Vergussmasse. Es ist wahlweise möglich, dass die PUR-Vergussmasse eingegossen, eingespritzt oder gegebenenfalls mit Druck eingepresst wird. Wahlweise kann die PUR-Vergussmasse je nach stofflicher Zusammensetzung entweder bei normaler Umgebungstemperatur in einer gewissen Zeit aushärten oder diese kann auch zusätzlich mittels eines gesonderten Wärmeeintrages beschleunigt verfestigt werden.

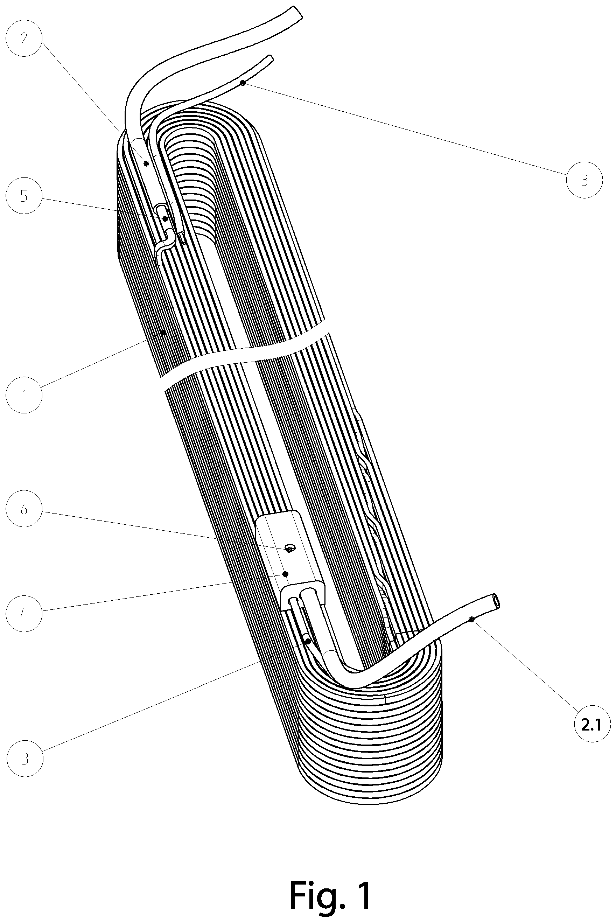

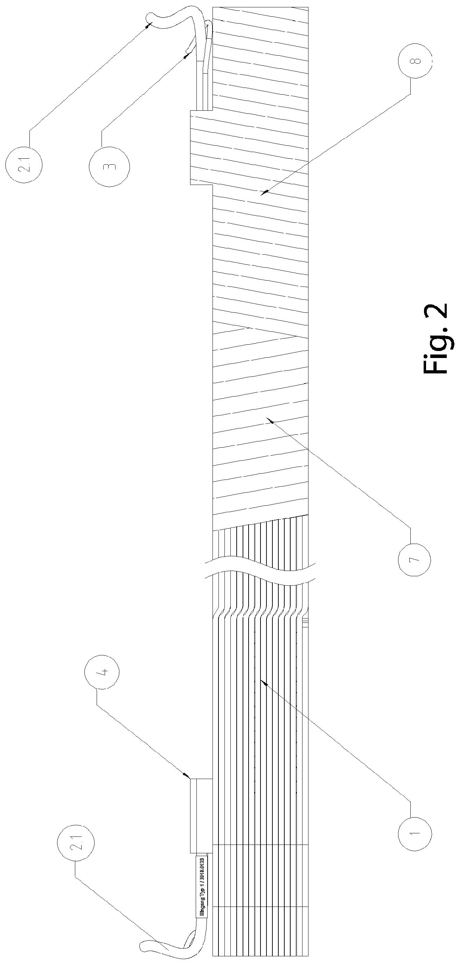

Die Erfindung soll nachstehend in einem Ausführungsbeispiel an Hand der Figuren 1 und 2 näher erläutert werden. Das nachstehend beschriebene Ausführungsbeispiel bezieht sich auf eine klimafeste Magnetspule 1 für den Einbau in eine Magnetschwebebahn, wobei die Magnetspulen 1 die Magnetschwebebahn in Schwebe halten müssen. Sie liegen daher, um eine möglichst effektive Wirkung erzielen zu können, unmittelbar frei ohne einen weiteren Schutz unter der Schwebebahn und sind damit jeglichen jahreszeitbedingten Witterungseinflüssen direkt ausgesetzt.
- Fig. 1: zeigt eine Schrägdraufsicht auf eine mögliche Ausführung einer klimafesten Magnetspule 1
- Fig. 2: zeigt eine Seitenansicht einer Magnetspule 1 mit den beiden Lagen der Spulenisolation, teilweise dargestellt

In **Figur 1** ist eine Schrägdraufsicht auf eine mögliche Ausführung einer klimafesten Magnetspule 1 abgebildet, welche den unisolierten Zustand einer bevorzugten Ausführungsform einer erfindungsgemäßen Magnetspule 1 zeigt. Hier ist eine Vielzahl von Windungen einer Magnetformspule mit zwei Spulenausleitungen 2 und den zugehörigen angelöteten Anschlusskabeln 2.1 und den daneben angeordneten Ausleitungen zur Spulenüberwachung 3 ersichtlich. Das Anschlusskabel 2.1 ist mit der Ausleitung der Spule an den Ausleitungsstellen verlötet und diese Lötstelle ist mit einem Schrumpfschlauch 5 zusätzlich isoliert. Auf einer Seite ist der Ausleitungsbereich ohne Abdeckung durch eine Glasfaserhartgewebehülse 4 und auf der anderen Seite mit bereits aufgebrachter Glasfaserhartgewebehülse 4 gezeigt, wobei der unmittelbare Ausleitungsbereich aus der Magnetspule 1 vollständig überdeckt ist. In der Glasfaserhartgewebehülse 4 ist eine durchgehende Öffnung 6, wie hier beispielsweise eine Bohrung angeordnet.

**Fig. 2** zeigt eine Seitenansicht einer Magnetspule 1 mit den beiden Lagen der aufgebrachten Spulenisolation, teilweise dargestellt. Die mit der Glasfaserhartgewebehülse 4 versehene Magnetspule 1 wird in einem ersten Einbindeschritt lückenlos bis an die Glasfaserhartgewebehülsen 4 (d. h. die Glasfaserhartgewebehülsen 4 werden nicht überbunden) eingebunden. Üblicherweise wird hier diese Klebelage bis maximal auf Stoß eingebunden, so dass keine Überlappungen beim Einbinden entstehen. Für das erste Einbinden der Magnetspule 1 wird ein epoxidharzhaltiges Prepregband 7 verwendet, welches aus einem dünnen Glasgewebe mit einem hohem Epoxidharzanteil im Bereich von 125g/m² +/- 20 g/m² besteht. Über diese erste Klebelage wird in einem zweiten Einbindeschritt ein wiederum epoxidharzhaltiges Isolations-Deckband 8 entgegengesetzt, vorzugsweise halbüberlappend in zwei lagen gewickelt, so dass auch der Ausleitungsbereich mit der wannenförmigen Glasfaserhartgewebehülse 4 vollständig überdeckt ist. Es entstehen so vier Deckschichten. Anschließend erfolgt das Aushärten mit üblichen bekannten Aushärteverfahren mittels Wärmeeintrag. Nach dem Aushärten wird die doppellagige Isolier-Deckbandisolation an der Stelle, an der die Öffnung 6 in der Glasfaserhartgewebehülse 4 angeordnet ist, geöffnet, indem die Isolation mit einem geeigneten Werkzeug durchstoßen wird. Durch diese Öffnung 6 in die wannenförmige Glasfaserhartgewebehülse 4 wird dann eine elastische, zunächst niedrigviskose PUR-Vergussmasse eingedrückt und bei Raumtemperatur ausgehärtet. Diese Magnetspule 1 für eine Magnetschwebebahn mit dem beschriebenen Isolationsaufbau ist extrem wasserdicht und witterungsbeständig, einfach und kostengünstig herstellbar und besitzt eine lange Lebensdauer.

### Bezugszeichenliste

- 1: Magnetspule
- 2: Spulenausleitung
- 2.1: Anschlusskabel
- 3: Ausleitung zur Spulenüberwachung
- 4: Glasfaserhartgewebehülse (HGW-Hülse)
- 5: Lötstelle mit Schrumpfschlauch
- 6: Öffnung in der Glasfaserhartgewebehülse
- 7: epoxidharzhaltiges Prepregband
- 8: epoxidharzhaltiges Isolations-Deckband

## Patentansprüche

1. Klimafeste Magnetspule (1) für den Einbau auf ein Joch, wobei die Magnetspule (1) eine Kupferspule mit einer Spulenausleitung (2) über ein an der Kupferspule angeordnetes Anschlusskabel (2.1) umfasst, welches mittels einer Lötstelle mit der Kupferspule stoffschlüssig verbunden ist,
wobei die Magnetspule (1) mit einem epoxidharzhaltigen Prepregband (7), als Teil der Magnetspule (1), eingebunden ist,
**dadurch gekennzeichnet,**
**dass** über dem Ausleitungsbereich des Anschlusskabels (2.1) und einer Ausleitung (3) der Magnetspule (1) zur Spulenüberwachung eine wannenförmigen Glasfaserhartgewebehülse (4), als Teil der Magnetspule (1), so angeordnet ist,
**dass** diese den Ausleitungsbereich vollständig überdeckt,
**dass** in der Glasfaserhartgewebehülse (4) eine elastische Vergussmasse eingebracht ist, dass über die gesamte Magnetspule (1) einschließlich der Glasfaserhartgewebehülse (4) ein epoxidharzhaltiges ***Isolations-Deckband*** (8), als Teil der Magnetspule (1), angeordnet ist.

2. Verfahren zur Herstellung einer klimafesten Magnetspule (1), wobei die Magnetspule (1) eine Kupferspule mit einer Spulenausleitung (2) über ein an der Kupferspule angeordnetes Anschlusskabel (2.1) umfasst, welches mittels einer Lötstelle mit der Kupferspule stoffschlüssig verbunden ist,
wobei die Magnetspule (1) mit einem epoxidharzhaltigen Prepregband (7), als Teil der Magnetspule (1), eingebunden wird,
**dadurch gekennzeichnet,**
**dass** der Ausleitungsbereich des Anschlusskabels (2.1) mit einer wannenförmigen Glasfaserhartgewebehülse (4), als Teil der Magnetspule (1), vollständig überdeckt wird, dass über die gesamte Magnetspule (1) einschließlich der Glasfaserhartgewebehülse (4) ein epoxidharzhaltiges Isolations-Deckband (8), als Teil der Magnetspule (1), gewickelt und anschließend ausgehärtet wird,
**dass** das Isolations-Deckband (8) an mindestens einer Stelle geöffnet wird,
**dass** in die wannenförmige Glasfaserhartgewebehülse (4) eine elastische Vergussmasse eingebracht wird,
welche eigenständig oder unter Wärmeeintrag ausgehärtet wird.

3. Klimafeste Magnetspule (1) nach Anspruch 1,
**dadurch gekennzeichnet,**
**dass** in der wannenförmigen Glasfaserhartgewebehülse (4) eine oder mehrere Öffnungen (6) angeordnet sind.

4. Klimafeste Magnetspule (1) nach Anspruch 1,
**dadurch gekennzeichnet,**
**dass** das epoxidharzhaltige Prepregband aus einem dünnen Glasgewebe mit hohem Epoxidharzanteil im Bereich von 125g/m² +/- 20 g/m² besteht.

5. Klimafeste Magnetspule (1) nach Anspruch 1,
**dadurch gekennzeichnet,**
**dass** die Lötstelle mit einem Schrumpfschlauch umhüllt ausgebildet ist.

6. Verfahren zur Herstellung klimafester Magnetspulen (1) nach Anspruch 2,
**dadurch gekennzeichnet,**
**dass** die in die wannenförmige Glasfaserhartgewebehülse (4) eingebrachte elastische Vergussmasse aus einer niedrigviskosen PUR-Vergussmasse besteht und diese eingegossen, eingespritzt oder mit Druck eingepresst und anschließen ausgehärtet wird.

## Claims

1. Climate-proof magnetic coil (1) for installation onto a yoke, the magnetic coil (1) comprising a copper coil with a coil lead-out (2) via a connection cable (2.1) positioned on the copper coil and materially bonded to the copper coil by means of a solder joint,
the magnetic coil (1) being embedded by means of a prepreg strip (7) containing epoxy resin, as part of the magnetic coil (1),
**characterized in that**
over the lead-out area of the connection cable (2.1) and a lead-out (3) of the magnetic coil (1), a trough-shaped laminated glass fibre fabric sleeve (4), as part of the magnetic coil (1), is disposed for coil monitoring such that
it fully covers the lead-out area,
an elastic potting compound is introduced in the laminated glass fibre fabric sleeve (4),
an insulating cover strip (8) containing epoxy resin, as part of the magnetic coil (1), is positioned over the entire magnetic coil (1) including the laminated glass fibre fabric sleeve (4).

2. Process for manufacturing a climate-proof magnetic coil (1), the magnetic coil (1) comprising a copper coil with a coil lead-out (2) via a connection cable (2.1) positioned on the copper coil and materially bonded to the copper coil by means of a solder joint,
the magnetic coil (1) being embedded by means of a prepreg strip (7) containing epoxy resin, as part of the magnetic coil (1),
**characterized in that**
the lead-out area of the connection cable (2.1) is fully covered with a trough-shaped laminated glass fibre fabric sleeve (4), as part of the magnetic coil (1),
an insulating cover strip (8) containing epoxy resin, as part of the magnetic coil (1), is wound over the entire magnetic coil (1) including the laminated glass fibre fabric sleeve (4) and subsequently cured,
the insulating cover strip (8) is opened at least in one place,
an elastic potting compound is introduced into the trough-shaped laminated glass fibre fabric sleeve (4),
which is left to cure on its own or under heat input.

3. Climate-proof magnetic coil (1) according to claim 1,
**characterized in that**
one or several openings (6) are positioned in the trough-shaped laminated glass fibre fabric sleeve (4).

4. Climate-proof magnetic coil (1) according to claim 1,
**characterized in that**
the prepreg strip containing epoxy resin consists of a thin glass fabric with a high proportion of epoxy resin in the range of 125g/m² +/- 20 g/m².

5. Climate-proof magnetic coil (1) according to claim 1,
**characterized in that**
the solder joint is formed using a shrink-wrap tube.

6. Method for manufacturing climate-proof magnetic coil (1) according to claim 2, **characterized in that**
the elastic potting compound introduced into the trough-shaped laminated glass fibre fabric sleeve (4) consists of a low-viscosity PUR potting compound, which is introduced by casting, injection moulding or pressing and then left to cure.

## Revendications

1. Bobine d'aimant (1) résistante aux conditions climatiques destinée à être installée sur un joug, la bobine d'aimant (1) comprenant une bobine en cuivre pourvue d'une sortie (2) de bobine par un câble de connexion (2.1) disposé sur la bobine en cuivre et raccordé à la bobine en cuivre par liaison de matière au moyen d'une soudure,
la bobine d'aimant (1) étant scellée par un ruban préimprégné (7) contenant de la résine époxy et faisant partie de la bobine d'aimant (1),
**caractérisée en ce que**
sur la zone de sortie du câble de connexion (2.1) et une sortie (3) de la bobine d'aimant (1), pour surveiller la bobine, une douille (4) de stratifié à fibres de verre, en forme de bac, faisant partie de la bobine d'aimant (1), est disposée de telle sorte
qu'elle recouvre entièrement la zone de sortie,
qu'une masse de scellement élastique soit introduite dans la douille (4) de stratifié à fibres de verre,
qu'un ruban de recouvrement isolant (8), faisant partie de la bobine d'aimant (1), soit disposé sur l'intégralité de la bobine d'aimant (1), y compris la douille (4) de stratifié à fibres de verre.

2. Procédé pour la fabrication d'une bobine d'aimant (1) résistante aux conditions climatiques, la bobine d'aimant (1) comprenant une bobine en cuivre pourvue d'une sortie (2) de bobine par un câble de connexion (2.1) disposé sur la bobine en cuivre et raccordé à la bobine en cuivre par liaison de matière au moyen d'une soudure,
la bobine d'aimant (1) étant scellée par un ruban préimprégné (7) contenant de la résine époxy et faisant partie de la bobine d'aimant (1),
**caractérisé en ce que**
la zone de sortie du câble de connexion (2.1) est entièrement recouverte par une douille (4) de stratifié à fibres de verre, en forme de bac, faisant partie de la bobine d'aimant (1),
un ruban de recouvrement isolant (8) contenant de la résine époxy, faisant partie de la bobine d'aimant (1), est enroulé sur l'intégralité de la bobine d'aimant (1), y compris la douille (4) de stratifié à fibres de verre, suivi de son durcissement,
le ruban de recouvrement isolant (8) est ouvert à au moins un endroit,
dans la douille (4) de stratifié à fibres de verre, est introduite une masse de scellement élastique,
laquelle durcit par elle-même ou bien moyennant un apport thermique.

3. Bobine d'aimant (1) résistante aux conditions climatiques selon la revendication 1, **caractérisée en ce que**
dans la douille (4) de stratifié à fibres de verre, en forme de bac, sont disposées une ou plusieurs ouvertures (6).

4. Bobine d'aimant (1) résistante aux conditions climatiques selon la revendication 1, **caractérisée en ce que**
le ruban préimprégné contenant de la résine époxy consiste en un fin tissu de verre comportant une forte proportion de résine époxy dans la plage de 125g/m² +/- 20 g/m^{2.}

5. Bobine d'aimant (1) résistante aux conditions climatiques selon la revendication 1, **caractérisée en ce que**
la soudure est réalisée de manière à être enveloppée d'une gaine thermorétractable.

6. Procédé pour la fabrication de bobines d'aimant (1) résistantes aux conditions climatiques selon la revendication 2,
**caractérisé en ce que**
la masse de scellement élastique introduite dans la douille (4) de stratifié à fibres de verre en forme de bac consiste en une masse PUR de faible viscosité et que celle-ci se trouve introduite par coulée, injection ou pression et laissée ensuite à durcir.
